# EUROPEAN PATENT APPLICATION

(11) **EP 4 773 433 A1**
(43) Date of publication of application: **08.07.2026**
(21) Application number: 24865712.4
(22) Date of filing: 21.08.2024
(51) Int. Cl.: H01Q 1/24, H01Q 9/28, H01Q 1/38, G06F 1/16, H01Q 9/04

(54) **WEARABLE DEVICE COMPRISING ANTENNA**

(30) Priority: 11.09.2023 KR 20230120738; 10.11.2023 KR 20230155919
(71) Applicant: Samsung Electronics Co., Ltd., Suwon-si, Gyeonggi-do 16677 (KR)
(72) Inventor: KIM, Taegyu, Suwon-si Gyeonggi-do 16677 (KR); KIM, Jaehyung, Suwon-si Gyeonggi-do 16677 (KR); KIM, Jonghoon, Suwon-si Gyeonggi-do 16677 (KR); LI, Hua, Suwon-si Gyeonggi-do 16677 (KR); MOON, Jesun, Suwon-si Gyeonggi-do 16677 (KR); OH, Dongjun, Suwon-si Gyeonggi-do 16677 (KR); YUN, Himchan, Suwon-si Gyeonggi-do 16677 (KR); LEE, Youngsung, Suwon-si Gyeonggi-do 16677 (KR)
(74) Representative: Gulde & Partner
(86) International application number: PCT/KR2024/012467
(87) International publication number: WO 2025/058271

(57) **Abstract**

This wearable device comprises: a wireless communication circuit; and a substrate including a first portion in which the wireless communication circuit is disposed, a second portion including a feed point electrically connected to the wireless communication circuit, and a fill cut region disposed between the first portion and the second portion. The wireless communication circuit is configured to communicate with an external electronic device by using at least a part of the substrate by feeding power to the feed point via the fill cut region. Other various embodiments may also be possible.

## Description

### [Technical Field]

The present disclosure relates to a wearable device including an antenna.

### [Background Art]

A wearable device may be worn and used on a user's body. The wearable device may include components for providing various functions. For example, the wearable device may include a substrate (e.g., a flexible printed circuit board) for providing an electrical connection between the components and an antenna for communication with an external electronic device (e.g., a user's smart phone). Since the wearable device is used in a state worn on the user's body, the wearable device may have a size corresponding to a body part to be worn. For example, in a case that the wearable device is a ring-shaped device worn on a finger of the user, the wearable device may have a size corresponding to a circumference of the finger.

The above-described information may be provided as a related art for the purpose of helping to understand the present disclosure. No claim or determination is raised as to whether any of the above-described information may be applied as a prior art related to the present disclosure.

### [Disclosure]

### [Technical Solution]

A wearable device is provided. The wearable device may include wireless communication circuitry. The wearable device may include a substrate. The substrate may include a first part in which the wireless communication circuitry is disposed, a second part including a feeding point electrically connected to the wireless communication circuitry, and a fill cut area disposed between the first part and the second part. The wireless communication circuitry may be configured to communicate with an external electronic device using at least a portion of the substrate by feeding the feeding point through the fill cut area.

A wearable device is provided. The wearable device may include a housing having a ring shape. The wearable device may include a substrate including a first part, a second part spaced apart from the first part, and a fill cut area disposed between the first part and the second part. The substrate may be disposed within the housing. The wearable device may include wireless communication circuitry configured to transmit a signal on a designated frequency to an external electronic device or receive the signal from the external electronic device, by using at least a portion of the substrate. The wireless communication circuitry may be disposed on the first part. The second part may include a feeding point located at an end of the second part facing the first part and electrically connected to the wireless communication circuitry.

### [Description of the Drawings]

FIG. 1 is a block diagram of an electronic device in a network environment according to an embodiment.
FIG. 2A illustrates a wearable device according to an embodiment worn on a body of a user.
FIG. 2B is an exploded view of a wearable device according to an embodiment.
FIG. 2C is a schematic block diagram of a wearable device according to an embodiment.
FIG. 3A illustrates a substrate of a wearable device according to an embodiment.
FIG. 3B illustrates a structure of a dipole antenna.
FIG. 3C illustrates a state in which the substrate of FIG. 3A is disposed within a housing.
FIG. 4A illustrates a wire disposed in a fill cut area within a substrate according to an embodiment.
FIG. 4B is a graph illustrating radiation efficiency of an antenna of a wearable device.
FIG. 5A schematically illustrates a distribution of current formed in a substrate of a wearable device according to an embodiment.
FIG. 5B schematically illustrates an electromagnetic field formed in a wearable device according to an embodiment.
FIG. 5C is a graph illustrating radiation efficiency of an antenna of an electronic device according to an embodiment.
FIGS. 6A, 6B, and 6C are graphs illustrating radiation efficiency of an antenna according to a wearing state of a wearable device.
FIG. 7A illustrates structures of a housing of a wearable device according to an embodiment.
FIG. 7B is a graph illustrating radiation efficiency of an antenna according to the structures of the housing illustrated in FIG. 7A.
FIG. 7C illustrates exemplary non-conductive parts.
FIG. 8A illustrates a part of a substrate according to an embodiment.
FIG. 8B is a graph illustrating radiation efficiency of an antenna according to a width of a fill cut area.

### [Mode for Invention]

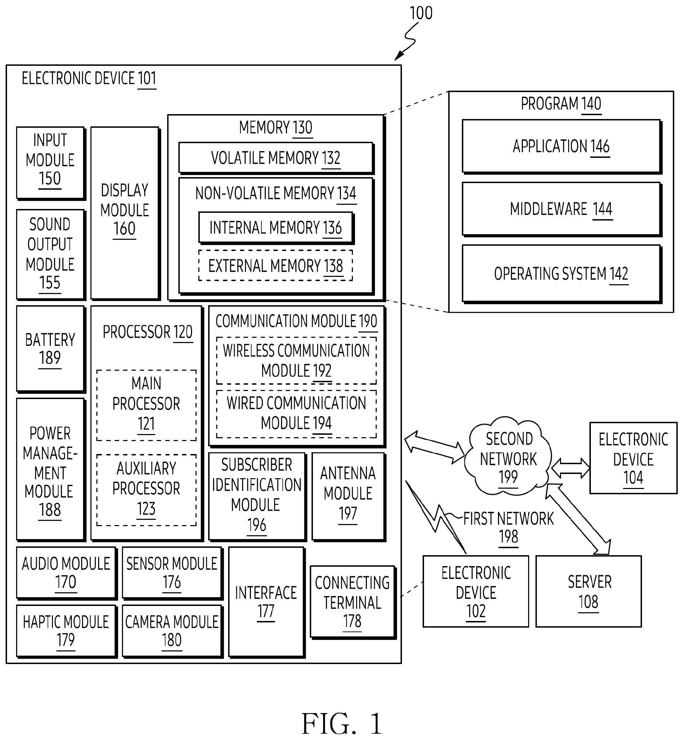

FIG. 1 is a block diagram illustrating an electronic device 101 in a network environment 100 according to an embodiment.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

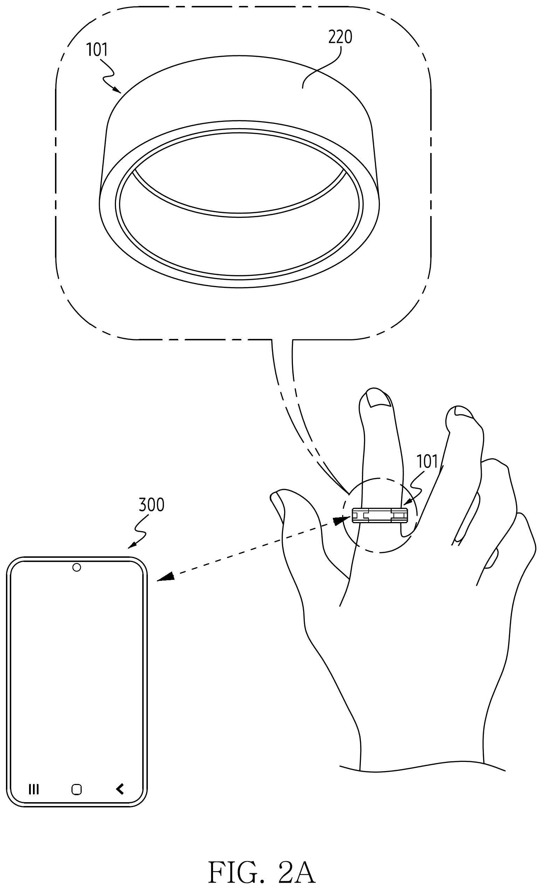

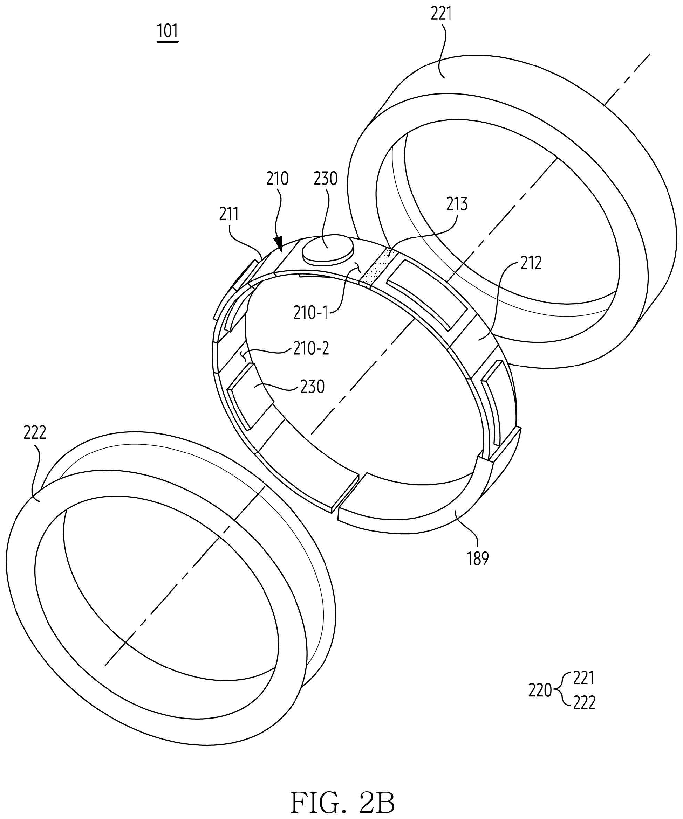

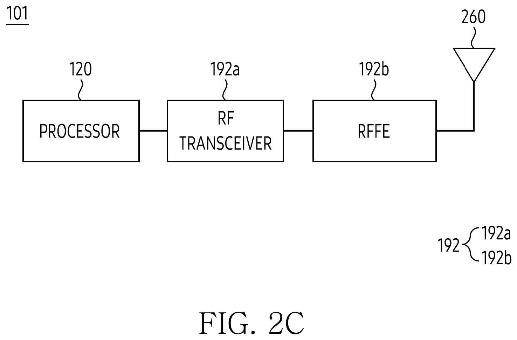

FIG. 2A illustrates a wearable device according to an embodiment worn on a body of a user. FIG. 2B is an exploded view of a wearable device according to an embodiment. FIG. 2C is a schematic block diagram of a wearable device according to an embodiment.

Referring to FIG. 2A, a wearable device (e.g., the electronic device 101 of FIG. 1) according to an embodiment may be used in a state worn on a body of a user. For example, the wearable device 101 according to an embodiment may include a ring-shaped housing 220 wearable on a finger of the user. The wearable device 101 including the ring-shaped housing 220 may be implemented as a ring-shaped device wearable on the finger of the user. In the present disclosure, for convenience of description, the wearable device 101 is described as a ring-shaped device, but is not limited thereto. For example, the wearable device 101 may include an earring-shaped device wearable on an ear of the user, a bracelet-shaped device wearable on an arm of the user, and/or a headband-shaped device wearable on a head of the user. The wearable device 101 may be used in a state worn on a body of the user. For example, the wearable device 101 may be configured to communicate with an external electronic device 300 (e.g., a smart phone) in a state worn on the body of the user.

For example, the housing 220 may form an exterior of the wearable device 101. For example, a size of the housing 220 may be determined based on a body part on which the wearable device 101 is worn. Since the wearable device 101 is used in a state worn on a body of a user, the size of the housing 220 may be limited. For example, in a case that the wearable device 101 is a ring-shaped device, the housing 220 may be limited to a size wearable on a finger.

Referring to FIG. 2B, the wearable device 101 may include a housing 220 and a substrate 210.

For example, in a case that the wearable device 101 is a ring-shaped device, the housing 220 may have a ring shape. For example, the housing 220 may include a first housing part 221 and a second housing part 222.

For example, the first housing part 221 may be a part of the housing 220 exposed to an outside in a state in which the wearable device 101 is worn on a body of a user. For example, the first housing part 221 may form an outer surface of the ring-shaped housing 220.

For example, the second housing part 222 may be a part of the housing 220 at least partially in contact with a body of a user in a state in which the wearable device 101 is worn on the body of the user. For example, the second housing part 222 may be coupled to the first housing part 221. For example, the second housing part 222 may form an inner surface of the ring-shaped housing 220 by being inserted into an inner surface of the first housing part 221. For example, the substrate 210 may be disposed between the first housing part 221 and the second housing part 222. The first housing part 221 may be referred to as an outer part in terms of forming an outer surface of the housing 220. The second housing part 222 may be referred to as an inner part in terms of forming an inner surface of the housing 220.

For example, the housing 220 may have a design capable of providing a visual effect. For example, a visual effect of the wearable device 101 may be enhanced by a shape of the first housing part 221 exposed to an outside, a color of the first housing part 221, and/or a pattern formed on an outer surface of the first housing part 221. For example, the wearable device 101 may provide an aesthetic function by having a design suitable for a preference of a user because the wearable device 101 may be worn on a body of the user. The outer surface of the first housing part 221 illustrated in FIG. 2B is illustrated as having a substantially smooth curved surface, but is not limited thereto.

The wearable device 101 according to an embodiment may include at least one electronic component 230 for implementing various functions. For example, the wearable device 101 may include a global positioning system (GPS) module for providing location information, an antenna (e.g., the antenna module 197 of FIG. 1) for providing communication (e.g., Bluetooth communication) with an external electronic device (e.g., the external electronic device 300 of FIG. 2A (e.g., a smart phone)), a sensor (e.g., the sensor module 176 of FIG. 1) for collecting health information and/or activity information of a user, a haptic module (e.g., the haptic module 179 of FIG. 1) for providing mechanical stimulation, and/or a speaker (e.g., the sound output module 155 of FIG. 1) for providing sound, but is not limited thereto. For example, the at least one electronic component 230 may be located inside the housing 220 by being disposed on the substrate 210. For example, in a case that the wearable device 101 includes a sensor (e.g., a photoplethysmography (PPG) sensor) for measuring a heart rate of a user, the second housing part 222 may include a substantially transparent part so that the sensor may obtain data regarding a heart rate and/or breathing of the user.

For example, the substrate 210 may include a flexible printed circuit board (FPCB) having flexibility. For example, the substrate 210 having flexibility may be disposed within the housing 220 by being deformable into a shape corresponding to a shape of the housing 220. For example, in a case that the wearable device 101 is a ring-shaped device, the substrate 210 may be disposed inside the housing 220 by being bent to have a ring shape corresponding to a shape of the housing 220.

For example, the at least one electronic component 230 may be disposed on the substrate 210. For example, a sensor may be disposed on a first surface 210-1 of the substrate 210 facing the first housing part 221 and/or on a second surface 210-2 of the substrate 210 facing the second housing part 222. For example, the substrate 210 may be electrically connected to a battery 189 for providing power to the at least one electronic component 230. For example, the at least one electronic component 230 may be electrically connected to the battery 189 through a conductive layer included in the substrate 210.

Referring to FIG. 2C, the wearable device 101 according to an embodiment may include an antenna 260 and wireless communication circuitry (e.g., the wireless communication module 192 of FIG. 1) for communication with an external electronic device (e.g., the external electronic device 300 of FIG. 2A). For example, the wearable device 101 may include a processor 120, the wireless communication circuitry 192, and the antenna 260.

For example, the processor 120 may include at least one of an application processor (AP) (e.g., the main processor 121 of FIG. 1) or a communication processor (CP) (e.g., the auxiliary processor 123 of FIG. 1). For example, the wireless communication circuitry 192 may include a radio frequency (RF) transceiver 192a and a radio frequency front end (RFFE) 192b.

For example, the processor 120 may generate a baseband signal. The processor 120 may control the RF transceiver 192a to process the generated baseband signal. The processor 120 may control the RF transceiver 192a so that a transmission signal is transmitted through the antenna 260. The processor 120 may control the RF transceiver 192a so that the transmission signal is transmitted in a frequency band capable of communicating with an external electronic device (e.g., the external electronic device 300 of FIG. 2A).

For example, the RF transceiver 192a may be implemented as a part of a single package or a single chip (e.g., an RFIC chip). The RF transceiver 192a may include a digital to analog converter (DAC) for converting a digital signal into an analog signal. The RF transceiver 192a may include a mixer and an oscillator (e.g., a local oscillator (LO)) for up-conversion. The RF transceiver 192a may convert a baseband signal generated by the processor 120 into an RF signal. The RF transceiver 192a may include an analog to digital converter (ADC) for converting an analog signal into a digital signal. The RF transceiver 192a may include a mixer and an oscillator for down-conversion. The RF transceiver 192a may convert an RF signal received from the antenna 260 into a baseband signal so that the RF signal is processed by the processor 120.

For example, the RFFE 192b may include a plurality of components electrically connected between the RF transceiver 192a and the antenna 260. For example, the RFFE 192b may include components such as a coupler, a power amplifier (PA), a low noise amplifier (LNA), a switch circuit, and/or a duplexer, but is not limited thereto.

For example, the antenna 260 may be used to transmit and/or receive a signal on a designated frequency band. For example, the antenna 260 may include an antenna radiator, which is a physical component for radiating or receiving an electromagnetic wave.

For example, the antenna radiator, which is a physical component of an antenna that radiates an electromagnetic wave into a space and/or receives an electromagnetic wave from a space, may transmit and/or receive a signal through an electromagnetic wave. A shape and performance of the antenna 260 may be determined based on the antenna radiator. For example, a frequency characteristic (e.g., a resonant frequency) of the antenna 260 may be determined according to a size and a shape of the antenna radiator. Since the antenna radiator has a physical size, a certain space in which the antenna radiator may be disposed may be required. For example, since the wearable device 101 is limited to a size for being worn on a body of a user, an internal space of the housing 220 for the antenna radiator may be insufficient.

The wearable device 101 according to an embodiment may use at least a portion of a substrate (e.g., the substrate 210 of FIG. 2B) as an antenna radiator. For example, the substrate 210 may include a first part (e.g., the first part 211 of FIG. 2B) and a second part (e.g., the second part 212 of FIG. 2B) separated by a fill cut area (e.g., the fill cut area 213 of FIG. 2B). For example, the substrate 210 may operate as a dipole antenna operating based on a potential difference between the first part 211 and the second part 212. Since the wearable device 101 according to an embodiment uses at least a portion of the substrate 210 as an antenna radiator, a separate arrangement space for the antenna radiator is not required, and thus a structure of the wearable device 101 may be simplified, and an internal space of the housing 220 may be secured.

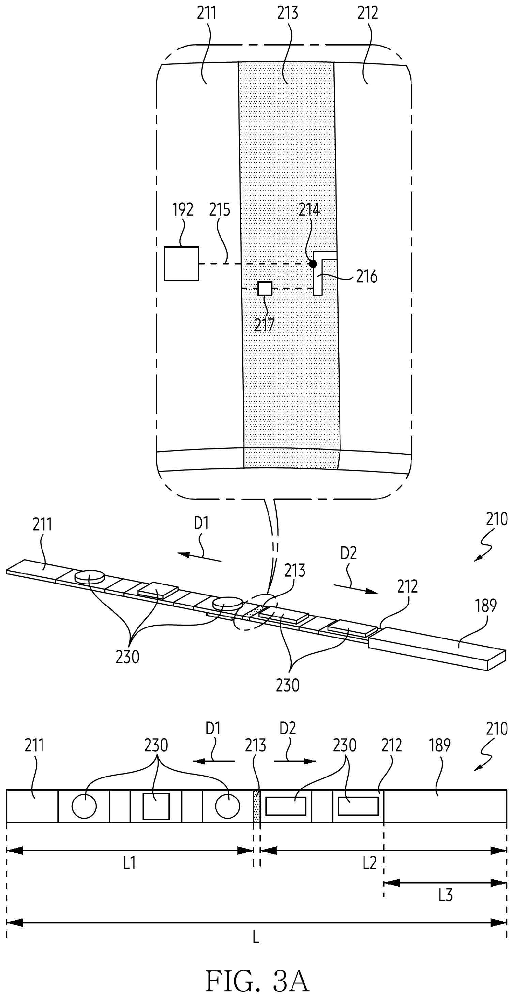

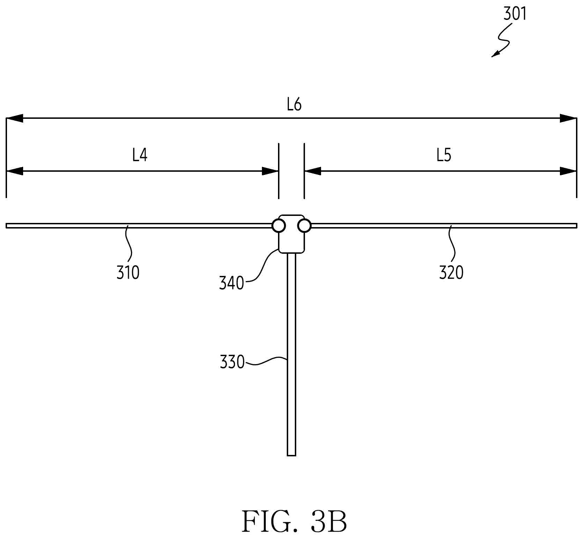

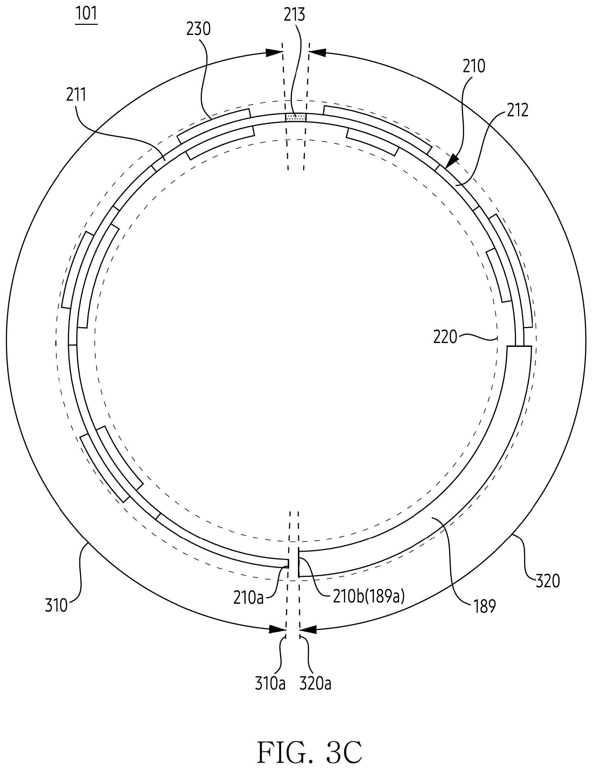

FIG. 3A illustrates a substrate of a wearable device according to an embodiment. FIG. 3B illustrates a structure of a dipole antenna. FIG. 3C illustrates a state in which the substrate of FIG. 3A is disposed within a housing.

Referring to FIG. 3A, a substrate 210 may include a first part 211, a second part 212, and a fill cut area 213. For example, the fill cut area 213 may be located between the first part 211 and the second part 212.

For example, the substrate 210 may provide an electrical connection of at least one electronic component 230 of a wearable device (e.g., the wearable device 101 of FIG. 2A). For example, the substrate 210 may include a plurality of conductive layers and a plurality of non-conductive layers alternately laminated with the plurality of conductive layers. For example, the substrate 210 may provide an electrical connection for the at least one electronic component 230 by using wires and conductive vias formed on the conductive layer.

For example, the fill cut area 213 may be an area in which a ground layer is removed. For example, in the fill cut area 213, a non-conductive layer may be exposed. For example, the substrate 210 may include a first part 211 and a second part 212 separated by the fill cut area 213. For example, the fill cut area 213 may be disposed between the first part 211 and the second part 212. For example, based on the fill cut area 213, the first part 211 and the second part 212 may extend in opposite directions. For example, the first part 211 may extend from the fill cut area 213 in a first direction D1. For example, the second part 212 may extend from the fill cut area 213 in a second direction D2 opposite to the first direction D1.

For example, wireless communication circuitry 192 may be disposed on the first part 211. For example, the second part 212 may include a feeding point 214 electrically connected to the wireless communication circuitry 192. For example, the wireless communication circuitry 192 may be configured to communicate with an external electronic device (e.g., the external electronic device 300 of FIG. 2A) using at least a portion of the substrate 210, by feeding the feeding point 214. For example, a part of a feeding path 215 for electrically connecting the wireless communication circuitry 192 and the feeding point 214 may be disposed in the fill cut area 213. For example, the wireless communication circuitry 192 may provide an electrical signal to the feeding point 214 through the feeding path 215 disposed in the fill cut area 213. For example, the feeding point 214 may be located at an end of the second part 212 facing the first part 211. For example, the second part 212 may include a flange part 216 formed at the end and including the feeding point 214. For example, the flange part 216 may be electrically connected to the feeding path 215 by protruding from the second part 212 into the fill cut area 213. The flange part 216 connected to the second part 212 may operate as a part of an antenna radiator. The flange part 216 may also be used for impedance matching for adjusting an impedance of the antenna radiator. For example, the flange part 216 may be electrically connected to an antenna switching circuit 217 for adjusting a parameter value (e.g., inductance and/or capacitance) of a passive element (e.g., inductor and/or capacitor) electrically connected to at least a portion of the substrate 210 operating as an antenna radiator. For example, a processor (e.g., the processor 120 of FIG. 2C) may be configured to control the antenna switching circuit 217. For example, the antenna switching circuit 271 may operate as a tunable matching circuit by including a switch circuit and at least one element.

For example, when an electrical signal is provided to the feeding point 214, a radiation current may flow along at least a portion of the substrate 210. An electromagnetic field may be formed around the substrate 210 by the radiation current. As an electromagnetic wave is radiated through at least a portion of the substrate 210 by the electromagnetic field, at least a portion of the substrate 210 may operate as an antenna radiator. For example, based on an electrical signal provided to the feeding point 214 through the fill cut area 213, at least a portion of the substrate 210 may operate as a dipole antenna including the first part 211 and the second part 212 having substantially the same electrical length with respect to a feeding position. For example, at least a portion of the substrate 210 may be operated as an antenna (e.g., a dipole antenna) based on a potential difference between the first part 211 and the second part 212.

FIG. 3B illustrates a basic structure of a dipole antenna 301. Referring to FIG. 3B, the dipole antenna 301 may include two conductive poles (e.g., a first conductive pole 310 and a second conductive pole 320) connected to a feeding line (e.g., a coaxial cable) 330. For example, as + feeding is provided to the first conductive pole 310 and - feeding is provided to the second conductive pole 320, a flow of current may be formed by a potential difference between the first conductive pole 310 and the second conductive pole 320. The flow of the current may cause an electric field and a magnetic field perpendicular to each other. As the electric field and the magnetic field vibrate by an alternating current power whose direction changes over time, an electromagnetic wave may be formed from the dipole antenna 301. The first conductive pole 310 and the second conductive pole 320 forming the dipole antenna 301 may be separated by an insulator 340 between the first conductive pole 310 and the second conductive pole 320. For example, when a wavelength corresponding to a resonant frequency of a signal transmitted and/or received through the dipole antenna 301 is w, an electrical length L4 of the first conductive pole 310 and an electrical length L5 of the second conductive pole 320 may be about w/4, and a total electrical length L6 of conductive poles may be about w/2. In the present disclosure, an electrical length may be referred to as a length of an antenna radiator capable of radiating or receiving an electromagnetic wave by an electromagnetic field being formed.

Referring again to FIG. 3A, the fill cut area 213 may be located substantially at a central portion in the substrate 210. For example, an electrical length L1 of the first part 211 and an electrical length L2 of the second part 212 separated by the fill cut area 213 may be substantially the same. For example, the electrical length L1 of the first part 211 may correspond to the electrical length L2 of the second part 212. However, it is not limited thereto. The electrical length L1 of the first part 211 may be different from the electrical length L2 of the second part 212.

For example, the substrate 210 may form a dipole antenna. For example, the first part 211 may correspond to a first conductive pole (e.g., the first conductive pole 310 of FIG. 3B) of the dipole antenna. For example, the second part 212 may correspond to a second conductive pole (e.g., the second conductive pole 320 of FIG. 3B) of the dipole antenna. For example, the fill cut area 213 separating the first part 211 and the second part 212 may correspond to an insulator (e.g., the insulator 340 of FIG. 3B) separating the first conductive pole 310 and the second conductive pole 320. For example, at least a portion of the substrate 210 may be configured to transmit and/or receive a signal on a resonant frequency based on an electrical length L of the substrate 210. For example, when a wavelength corresponding to a resonant frequency of a signal transmitted and/or received through an antenna using at least a portion of the substrate 210 as an antenna radiator is w, the electrical length L1 of the first part 211 and the electrical length L2 of the second part 212 may be about w/4, and a total electrical length L of the substrate 210 may be about w/2. For example, when a frequency of a signal transmitted and/or received through the antenna is about 2.4 GHz, a wavelength may be about 120 mm, and the electrical length L1 of the first part 211 and the electrical length L2 of the second part 212 may be about 30 mm. However, it is not limited thereto.

For example, the wearable device 101 may include a battery 189 electrically connected to the substrate 210. For example, the battery 189 connected to the substrate 210 may be configured to provide power for an operation of at least one electronic component 230 disposed on the substrate 210. For example, the battery 189 may form at least a portion of an antenna radiator. For example, when an electrical signal is provided to the feeding point 214, at least a portion of the battery 189 may operate as an antenna radiator (e.g., the second conductive pole 320 of FIG. 3B) together with at least a portion of the substrate 210. For example, the battery 189 may include a conductive case accommodating a battery cell therein. When an electrical signal is provided to the feeding point 214, a radiation current may flow along at least a portion of the substrate 210 (e.g., the second part 212) and at least a portion of the conductive case of the battery 189. By the radiation current, at least a portion of the conductive case of the battery 189 may operate as an antenna radiator together with at least a portion of the second part 212. For example, the second part 212 and the battery 189 may form a second conductive pole (e.g., the second conductive pole 320 of FIG. 3B). For example, the electrical length L2 of the second part 212 may be referred to as including an electrical length L3 of the battery 189. For example, the electrical length L1 of the first part 211 may correspond to the electrical length L2 including the electrical length L3 of the battery 189.

Referring to FIG. 3C, the substrate 210 may be disposed in the housing 220 surrounding the substrate 210 in a state of being at least partially bent. For example, when a shape of the housing 220 is a ring shape, the substrate 210 may have a shape corresponding to a shape of the housing 220 by being bent. For example, when the battery 189 is connected to the substrate 210, the battery 189 may be at least partially bent to correspond to a shape of the substrate 210.

As described above, at least a portion of the substrate 210 may operate as an antenna radiator. The first part 211 may form at least a portion of the first conductive pole (e.g., the first conductive pole 310 of FIG. 3B), and the second part 212 may form at least a portion of the second conductive pole (e.g., the second conductive pole 320 of FIG. 3B). When the battery 189 is connected to the second part 212, the battery 189 may form the second conductive pole 320 together with the second part 212.

For example, in a case that the substrate 210 is bent to correspond to a ring shape, in order for at least a portion of the substrate 210 operating as an antenna (e.g., a dipole antenna), an end 310a of the first conductive pole 310 may be spaced apart from an end 320a of the second conductive pole 320. For example, in a case that the substrate 210 is bent to have a ring shape inside the housing 220, an end 210a of the substrate 210 may be spaced apart from another end 210b of the substrate 210 opposite to the end 210a. For example, in a case that the battery 189 is connected to the second part 212, the end 210a may be spaced apart from an end 189a of the battery 189. An antenna (e.g., a dipole antenna) may be formed by the first conductive pole 310 being spaced apart from the second conductive pole 320.

For example, wireless communication circuitry (e.g., the wireless communication circuitry 192 of FIG. 2C) may be configured to communicate with an external electronic device (e.g., the external electronic device 300 of FIG. 2A) by at least partially using the substrate 210 and at least one electronic component 230. For example, the at least one electronic component 230 disposed on the substrate 210 may be used as an antenna radiator together with the substrate 210. For example, the at least one electronic component 230 may include a conductive component (e.g., a metal component). For example, the conductive component may be electrically connected to at least one substrate 210. For example, when wireless communication circuitry (e.g., the wireless communication circuitry 192 of FIG. 2C) feeds a feeding point (e.g., the feeding point 214 of FIG. 3A) of the substrate 210, a radiation current may be formed along at least a portion of the substrate 210 and at least a portion of a conductive component of the at least one electronic component 230, thereby causing an electromagnetic field. As an electromagnetic wave is radiated through the electromagnetic field, the wireless communication circuitry 192 may communicate with an external electronic device (e.g., the external electronic device 300 of FIG. 2A).

For example, in a case that a separate antenna radiator (e.g., a conductive pattern) is included in the substrate 210, a size of the substrate 210 may increase. For example, in a case that a connecting member (e.g., a c-clip, a conductive poron) for transmitting an electrical signal between the antenna radiator and the wireless communication circuitry 192 is included, a space for disposing a physical connecting member may be required. Since the wearable device 101 according to an embodiment may use the substrate 210 and/or at least one electronic component 230 as an antenna radiator, a separate antenna radiator (e.g., a conductive pattern) may be omitted within the housing 220. Since the wearable device 101 has a size wearable on a body of a user, an internal space of the housing 220 may be narrow. Since a space for disposing a separate antenna radiator may be omitted in the wearable device 101 according to an embodiment, a space for disposing another component (e.g., at least one electronic component 230) may be secured. For example, since the substrate 210 may operate as a dipole antenna through the fill cut area 213 formed in the substrate 210, a connecting member for transmitting an electrical signal between the antenna radiator and the wireless communication circuitry 192 may be omitted. The wearable device 101 according to an embodiment using at least a portion of the substrate 210 as an antenna radiator may secure an internal space of the housing 220 and may reduce manufacturing cost.

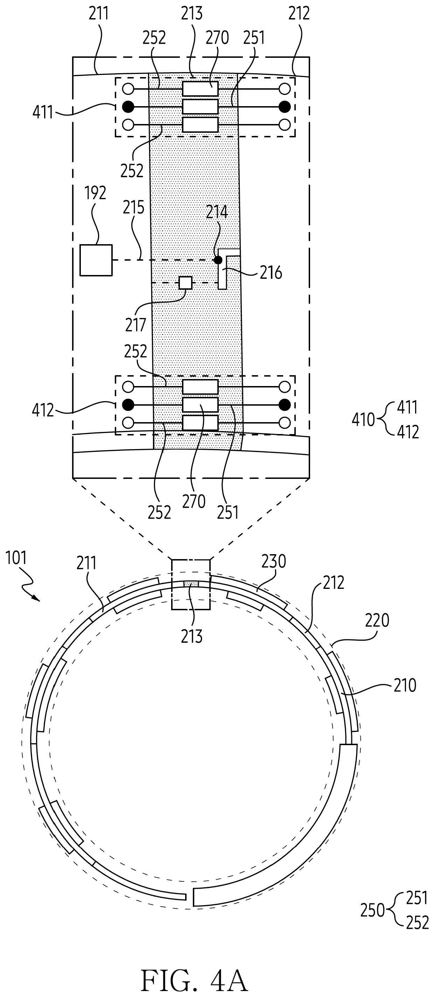

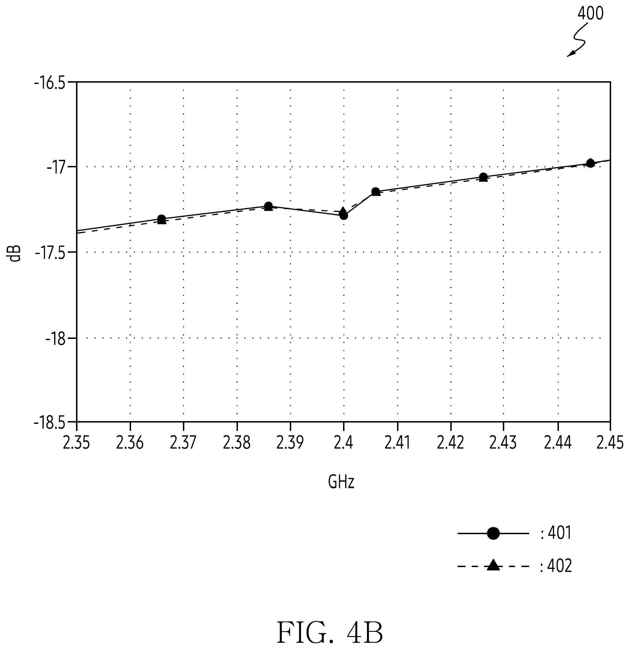

FIG. 4A illustrates a wire disposed in a fill cut area within a substrate according to an embodiment. FIG. 4B is a graph illustrating radiation efficiency of an antenna of a wearable device.

Referring to FIG. 4A, at least one wire 250 may be disposed in the fill cut area 213. For example, the at least one wire 250 may include a wire connection part 410 including a first wire 251 and/or a second wire 252. For example, the at least one wire 250 may extend from the first part 211, across the fill cut area 213, to the second part 212.

For example, the at least one wire 250 may be distinguished from a feeding path 215 for electrically connecting the wireless communication circuitry 192 disposed in the first part 211 and the feeding point 214 in the flange part 216. For example, the at least one wire 250 may include a first wire 251 for transmitting a signal between a processor (e.g., the processor 120 of FIG. 2C) and the at least one electronic component 230 and a second wire 252 for electrically connecting a ground layer in the first part 211 and a ground layer in the second part 212.

For example, the processor 120 may be disposed on the first part 211. For example, the first wire 251 may extend from the processor 120, across the fill cut area 213, to the at least one electronic component 230 disposed in the second part 212. For example, the at least one electronic component 230 disposed on the second part 212 may be electrically connected to the processor 120 through the first wire 251. For example, in a case that the at least one electronic component 230 includes a sensor, a control signal for controlling an operation of the sensor may be transmitted from the processor 120 to the sensor through the first wire 251. For example, sensing data measured through the sensor may be transmitted from the sensor to the processor 120 through the first wire 251.

For example, the substrate 210 may include a ground layer electrically connected to a ground of the wearable device 101. For example, the second wire 252 may extend from a ground layer in the first part 211, across the fill cut area 213, to a ground layer in the second part 212. For example, the second wire 252 may be configured to shield crosstalk causing noise between signal lines in the fill cut area 213. For example, the second wire 252 may be configured to shield electromagnetic mutual interference between an electrical signal (e.g., a control signal and sensing data) transmitted through the first wire 251 and another signal line (e.g., the feeding path 215 and/or another wire). For example, the second wire 252 may surround the first wire 251 in the fill cut area 213. For example, the second wire 252 may include two wires positioned with the first wire 251 interposed therebetween in the fill cut area 213. For example, when an electrical signal flows along the first wire 251, an induced signal component caused by the electrical signal may be discharged to a ground through the second wire 252 electrically connected to a ground layer of the substrate 210.

For example, the wearable device 101 may include a connecting member 270 located in the fill cut area 213 and electrically connected to at least one wire 250. For example, wires in the substrate 210 may be required to be matched to a reference impedance (e.g., 50 ohm) for impedance matching. For example, the connecting member 270 may include a passive element (e.g., inductor and/or capacitor) having a designated parameter value (e.g., inductance and/or capacitance). For example, the connecting member 270 may be an inductor having an inductance value designated so that the at least one wire 250 has the reference impedance.

In an embodiment, the wire connection part 410 may be one or more. For example, the wire connection part 410 may include a first wire connection part 411 disposed at a side of the feeding path 215 and a second wire connection part 412 disposed at another side of the feeding path 215, with respect to the feeding path 215. However, it is not limited thereto. The wire connection part 410 may include only one wire connection part (e.g., the first wire connection part 411), may also include two or more wire connection parts, and the number of wires (e.g., the first wire 251 and/or the second wire 252) is not limited.

For example, even when the connecting member 270 is located in the fill cut area 213, an antenna of the wearable device 101 may substantially maintain the same performance. Referring to FIG. 4B, a graph 400 illustrates a change in radiation efficiency of an antenna according to whether at least one wire (e.g., the at least one wire 250 of FIG. 4A) and a connecting member (e.g., the connecting member 270 of FIG. 4A) are included. An x-axis of the graph 400 is a frequency (unit: giga hertz (GHz)), and a y-axis of the graph 400 is radiation efficiency (unit: decibel (dB)).

A first graph 401 of FIG. 4B illustrates radiation efficiency of an antenna including at least a portion of a substrate (e.g., the substrate 210 of FIG. 4A) according to a frequency when a wearable device (e.g., the wearable device 101 of FIG. 4A) does not include at least one wire 250 and a connecting member 270. A second graph 402 of FIG. 4B illustrates radiation efficiency of the antenna according to a frequency when the wearable device 101 includes at least one wire 250 and a connecting member 270 located in a fill cut area (e.g., the fill cut area 213 of FIG. 4A). When comparing the first graph 401 and the second graph 402, the first graph 401 and the second graph 402 may be substantially the same within a frequency range between about 2.35 GHz and about 2.45 GHz. For example, in a case that a target frequency to be transmitted and/or received through the antenna is about 2.4 GHz, radiation efficiency indicated by the first graph 401 may be substantially the same as radiation efficiency indicated by the second graph 402, with respect to a frequency of about 2.4 GHz. Referring to FIG. 4B, even when the at least one wire 250 and the connecting member 270 are located in the fill cut area 213, radiation efficiency of the antenna may be maintained.

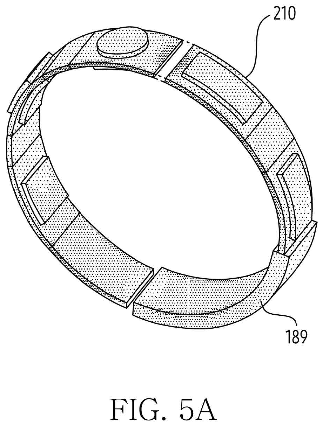

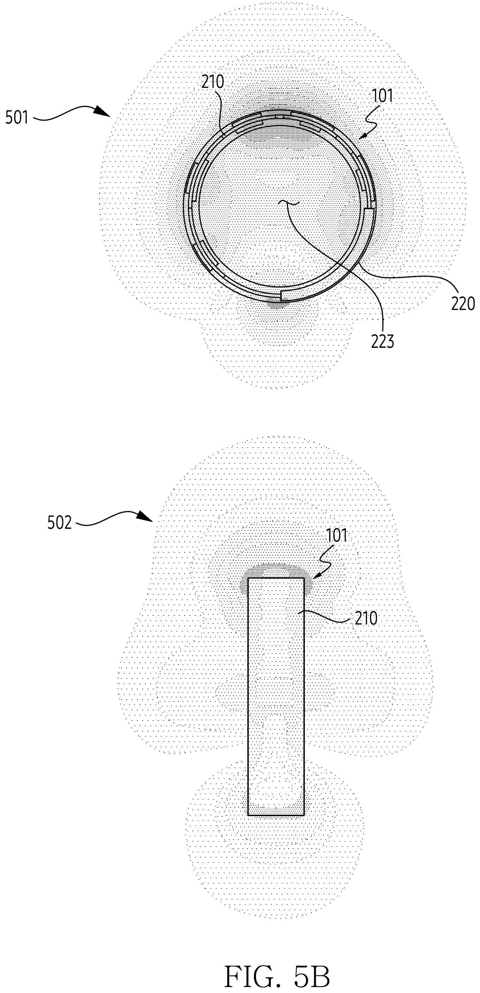

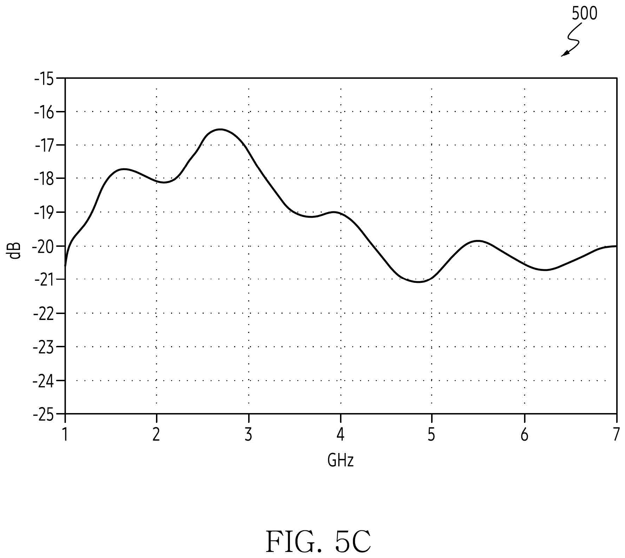

FIG. 5A schematically illustrates a distribution of current formed in a substrate of a wearable device according to an embodiment. FIG. 5B schematically illustrates an electromagnetic field formed in a wearable device according to an embodiment. FIG. 5C is a graph illustrating radiation efficiency of an antenna of an electronic device according to an embodiment.

Referring to FIG. 5A, when at least a portion of the substrate 210 operates as an antenna radiator, a radiation current may flow along the at least a portion of the substrate 210. For example, a radiation current may flow at least partially along a ground area included in the substrate 210 and/or an area including a conductive member (e.g., the battery 189) electrically connected to the substrate 210. For example, when an electrical signal is provided from wireless communication circuitry (e.g., the wireless communication circuitry 192 of FIG. 2C) to a feeding point (e.g., the feeding point 214 of FIG. 3A), a radiation current may flow along at least a portion of the substrate 210. The flow of the radiation current may cause an electromagnetic field formed on at least a portion of the substrate 210. By vibration of the electromagnetic field, an electromagnetic wave may be radiated into a space from at least a portion of the substrate 210.

As illustrated in FIG. 5A, the radiation current may be formed along at least a portion of the substrate 210 (or at least a portion of the substrate 210 and the battery 189). For example, in a case that at least a portion of the substrate 210 is not used as an antenna radiator and a separate antenna radiator for radiation and/or reception of electromagnetic waves is provided in the substrate 210, the radiation current may be concentrated on the separately provided antenna radiator.

In a case of a wearable device (e.g., the wearable device 101 of FIG. 2A) according to an embodiment, since at least a portion of the substrate 210 is used as an antenna radiator, a radiation current may be formed along at least a portion of the substrate 210. For example, since a shape of the substrate 210 disposed inside a housing (e.g., the housing 220 of FIG. 2A) is bent to correspond to a shape of the housing 220, a radiation current may be formed substantially evenly over an entire area of the housing 220.

Referring to FIG. 5B, an electromagnetic field formed by an antenna including at least a portion of the substrate 210 may be formed along the entire area of the housing 220. 501 of FIG. 5B illustrates an electromagnetic field formed around the housing 220 when an opening 223 of the ring-shaped housing 220 is viewed from the front. 502 of FIG. 5B illustrates an electromagnetic field formed around the housing 220 when the ring-shaped housing 220 is viewed from the side.

Referring to FIG. 5B, since the radiation current may be formed substantially evenly over the entire area of the housing 220, an electromagnetic field for radiating an electromagnetic wave may also be formed substantially evenly over the entire area of the housing 220.

For example, in a case that at least a portion of the substrate 210 is not used as an antenna radiator and a separate antenna radiator is provided in the substrate 210, since a radiation current is concentrated on the separately provided antenna radiator, an electromagnetic field formed by the antenna may be strongly formed in an area of the housing 220 in which the antenna radiator is disposed and may be weakly formed as a distance from the antenna radiator increases. In a case that the electromagnetic field is concentrated only on a specific area of the housing 220, communication performance of the wearable device 101 may deteriorate. For example, in a case that the wearable device 101 is a ring-shaped device, the wearable device 101 may be worn on a finger of a user. For example, in a case that the wearable device 101 is worn on a middle finger, a part of the housing 220 may be covered by an index finger and/or a ring finger. For example, in a case that the wearable device 101 is rotated in a state worn on the middle finger and an area of the housing 220 in which the antenna radiator is disposed is covered by the index finger and/or the ring finger, the electromagnetic field may be blocked by the index finger or the ring finger, and thus performance of the antenna may deteriorate.

Since the wearable device 101 according to an embodiment uses at least a portion of the substrate 210 as an antenna radiator, as illustrated in FIG. 5B, an electromagnetic field may be formed substantially evenly over the entire area of the housing 220. Communication performance of the wearable device 101 according to an embodiment may be improved by the electromagnetic field formed substantially evenly over the entire area of the housing 220. For example, in a case that the wearable device 101 is worn on a middle finger, even when a part of the housing 220 is covered by an index finger and/or a ring finger, a signal may be transmitted and/or received through an electromagnetic field formed on another part of the housing 220 exposed to an outside, so performance of the antenna may be substantially constantly maintained.

A graph 500 of FIG. 5C illustrates radiation efficiency according to a frequency of an antenna including at least a portion of a substrate (e.g., the substrate 210 of FIG. 5A). An x-axis of the graph 500 is a frequency (unit: giga hertz (GHz)), and a y-axis of the graph 500 is radiation efficiency (unit: decibel (dB)).

Referring to FIG. 5C, the graph 500 illustrates high radiation efficiency in a frequency range between about 2.4 GHz and about 3 GHz. For example, in a case that a wearable device (e.g., the wearable device 101 of FIG. 5B) is paired with an external electronic device (e.g., the external electronic device 300 of FIG. 2A (e.g., a smart phone)) using a frequency of about 2.4 GHz, an antenna including at least a portion of the substrate 210 may be used as an antenna for pairing. For example, the antenna may be used as an antenna for transmitting and/or receiving a Bluetooth signal and/or a WiFi signal, but is not limited thereto.

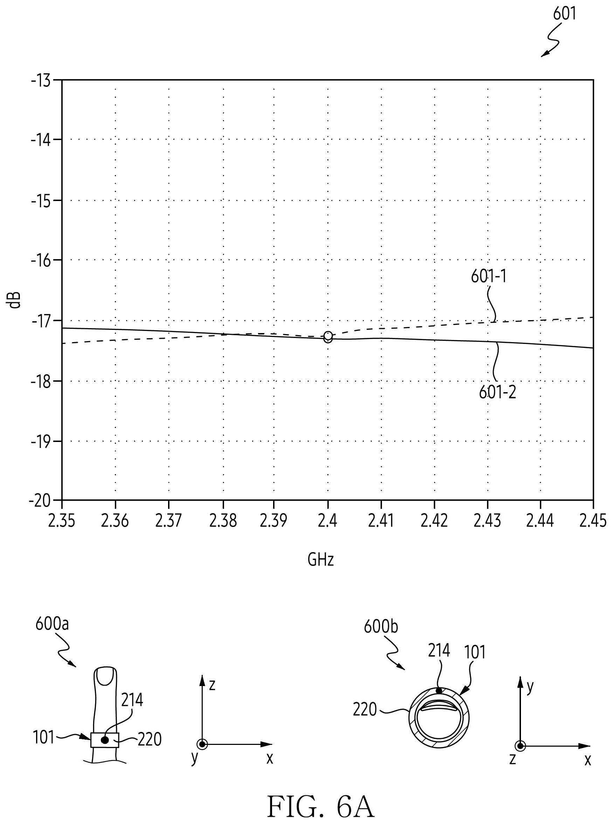

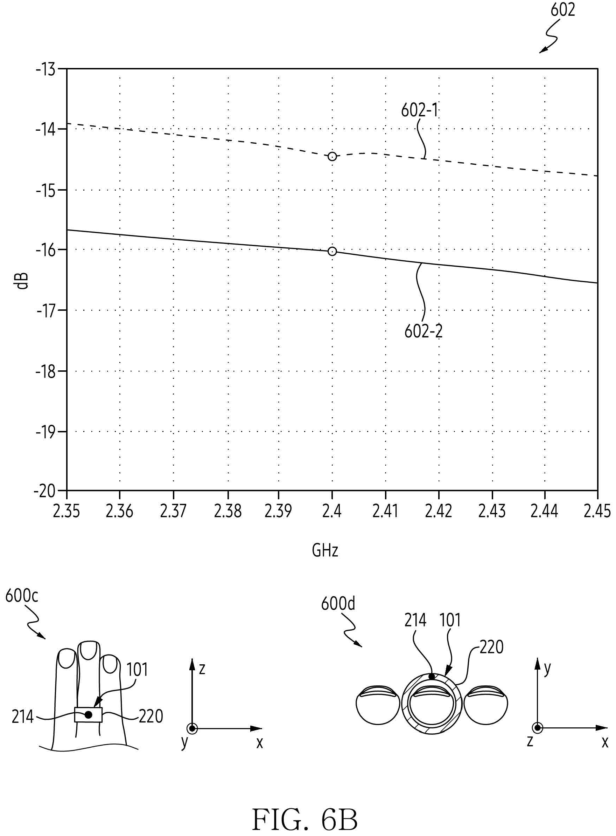

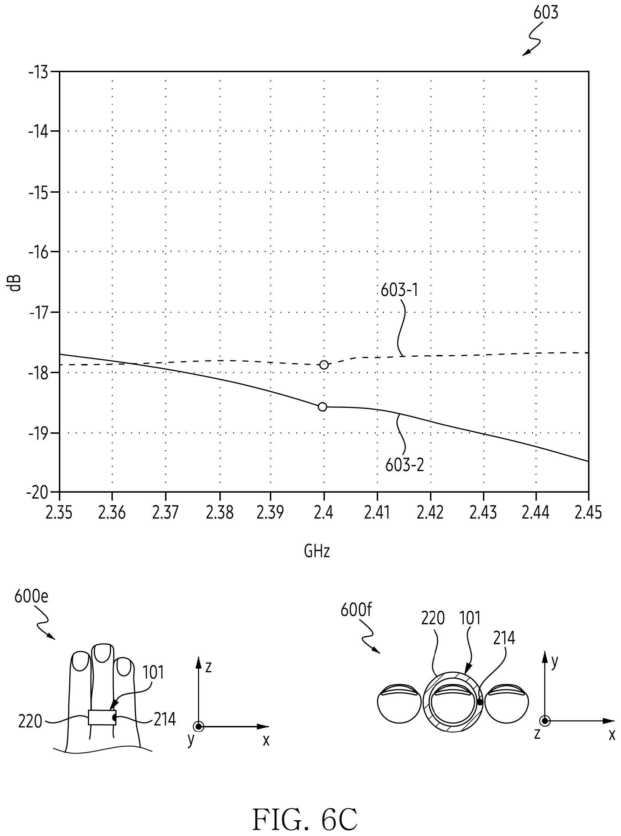

FIGS. 6A, 6B, and 6C are graphs illustrating radiation efficiency of an antenna according to a wearing state of a wearable device.

FIGS. 6A, 6B, and 6C are graphs for comparing communication performance of a wearable device 101 according to an embodiment and a wearable device according to a comparative example. As described above, the wearable device 101 according to an embodiment may be a wearable device including an antenna (e.g., a first antenna) using at least a portion of a substrate (e.g., the substrate 210 of FIG. 2B) as an antenna radiator. The wearable device according to a comparative example may be referred to as a wearable device including an antenna (e.g., a second antenna) including a separate antenna radiator provided in a partial area of the substrate 210. The wearable device according to a comparative example may be substantially the same as the wearable device 101 according to an embodiment except that the separate antenna radiator is provided on the substrate 210. An x-axis of graphs 601, 602, and 603 is a frequency (unit: giga hertz (GHz)), and a y-axis of the graphs 601, 602, and 603 is radiation efficiency (unit: decibel (dB)).

Referring to FIG. 6A, 600a of FIG. 6A illustrates a finger of a user viewed from above in a first wearing state in which the wearable device 101 according to an embodiment or the wearable device according to a comparative example is worn on the finger of the user. For example, 600b of FIG. 6A illustrates the finger of the user viewed from the front, in the first wearing state. For example, in the first wearing state, a position of the feeding point 214 may be aligned with an upper portion (e.g., a +y direction portion of the housing 220) of the housing 220.

A graph 601 of FIG. 6A illustrates radiation efficiency of antennas of wearable devices in the first wearing state. A first graph 601-1 illustrates radiation efficiency of a first antenna of the wearable device 101 according to an embodiment in the first wearing state. A second graph 601-2 illustrates radiation efficiency of a second antenna of a wearable device according to a comparative example in the first wearing state.

When comparing the first graph 601-1 and the second graph 602-2, radiation efficiency of the first antenna and radiation efficiency of the second antenna may be similar. For example, with respect to a frequency of about 2.4 GHz, radiation efficiency of the first antenna may be substantially the same as radiation efficiency of the second antenna. For example, in a case that a frequency of a signal to be transmitted and/or received through the first antenna and the second antenna is about 2.4 GHz, communication performance of the wearable device 101 according to an embodiment including the first antenna may be substantially similar to communication performance of the wearable device according to a comparative example including the second antenna. As described above, since the wearable device 101 according to an embodiment uses at least a portion of the substrate 210 as an antenna radiator, an internal space of the housing 220 may be secured. The wearable device 101 according to an embodiment may have substantially the same communication performance as the wearable device according to the comparative example while securing the internal space of the housing 220.

Referring to FIG. 6B, in a case that the wearable device 101 according to an embodiment or the wearable device according to a comparative example is worn on a middle finger of a user, a part of the housing 220 may be covered by an index finger and a ring finger. For example, 600c of FIG. 6B illustrates a hand of a user viewed from above in a second wearing state in which the wearable device 101 according to an embodiment or the wearable device according to a comparative example is worn on the middle finger of the user and is partially covered by the index finger and the ring finger. For example, 600d of FIG. 6B illustrates the hand of the user viewed from the front in the second wearing state. For example, in the second wearing state, a position of the feeding point 214 may be aligned with an upper portion (e.g., a +y direction portion of the housing 220) of the housing 220.

A graph 602 of FIG. 6B illustrates radiation efficiency of antennas of wearable devices in the second wearing state. A third graph 602-1 illustrates radiation efficiency of a first antenna of the wearable device 101 according to an embodiment in the second wearing state. A fourth graph 602-2 illustrates radiation efficiency of a second antenna of the wearable device according to a comparative example in the second wearing state.

When comparing the third graph 602-1 and the fourth graph 602-2, radiation efficiency of the first antenna may be higher than radiation efficiency of the second antenna within a frequency range between about 2.35 GHz and about 2.45 GHz. For example, with respect to a frequency of about 2.4 GHz, radiation efficiency of the first antenna may be about 1.6 dB higher than radiation efficiency of the second antenna. With respect to a frequency of about 2.4 GHz, radiation efficiency of the first antenna may be about -14.4 dB, and radiation efficiency of the second antenna may be about -16 dB.

For example, in a case that a frequency of a signal to be transmitted and/or received through the first antenna and the second antenna is about 2.4 GHz, communication performance of the wearable device 101 according to an embodiment including the first antenna may be better than communication performance of the wearable device according to a comparative example including the second antenna. For example, in a case of an electronic device according to an embodiment, since an electromagnetic field is formed substantially evenly over an entire area of the housing 220, interference by a finger (e.g., the index finger and/or the ring finger in FIG. 6B) contacting the housing 220 may be small. For example, in a case of the wearable device according to a comparative example, since an electromagnetic field is substantially concentrated on an upper portion (e.g., a +y direction portion of the housing 220) of the housing 220 aligned with an antenna radiator, radiation efficiency of the antenna may be decreased due to interference by the finger contacting the housing 220. When wearable devices are used in a state worn on a body, since a situation in which the housing 220 contacts a body of a user may occur frequently, communication performance of the wearable device 101 according to an embodiment may be better than communication performance of the wearable device according to the comparative example.

Referring to FIG. 6C, wearable devices may be rotated in a state worn on a finger. For example, as the wearable device 101 is rotated, a position of the feeding point 214 may be aligned with a side surface (e.g., a +x direction portion of the housing 220 or a -x direction portion of the housing 220) of the housing 220. For example, in a case that a position of the feeding point 214 is aligned with a side surface of the housing 220 while the wearable device 101 is worn on a middle finger, the feeding point 214 may face an index finger or a ring finger. For example, 600e of FIG. 6C illustrates a hand of a user viewed from above in a third wearing state in which the wearable device 101 according to an embodiment or the wearable device according to a comparative example is worn on a middle finger of the user and the feeding point 214 is partially covered by an index finger and a ring finger. For example, 600f of FIG. 6C illustrates the hand of the user viewed from the front in the third wearing state. For example, in the third wearing state, a position of the feeding point 214 may be aligned with a side surface (e.g., a +x direction portion of the housing 220 or a -x direction portion of the housing 220) of the housing 220.

A graph 603 of FIG. 6C illustrates radiation efficiency of antennas of wearable devices. A fifth graph 603-1 illustrates radiation efficiency of a first antenna of the wearable device 101 according to an embodiment in the third wearing state. A sixth graph 603-2 illustrates radiation efficiency of a second antenna of the wearable device according to a comparative example in the third wearing state.

When comparing the fifth graph 603-1 and the sixth graph 603-2, radiation efficiency of the first antenna may be higher than radiation efficiency of the second antenna within a frequency range between about 2.36 GHz and about 2.45 GHz. For example, with respect to a frequency of about 2.4 GHz, radiation efficiency of the first antenna may be about 0.7 dB higher than radiation efficiency of the second antenna. With respect to a frequency of about 2.4 GHz, radiation efficiency of the first antenna may be about -17.9 dB, and radiation efficiency of the second antenna may be about -18.6 dB.

For example, in a case that a frequency of a signal to be transmitted and/or received through the first antenna and the second antenna is about 2.4 GHz, communication performance of the wearable device 101 according to an embodiment including the first antenna may be better than communication performance of the wearable device according to a comparative example including the second antenna. For example, in a case of an electronic device according to an embodiment, since an electromagnetic field is formed substantially evenly over an entire area of the housing 220, even when a position of the feeding point 214 faces a side surface of the housing 220, interference by a finger (e.g., the index finger and/or the ring finger in FIG. 6B) contacting the housing 220 may be small. For example, in a case of the wearable device according to a comparative example, since an electromagnetic field is substantially concentrated on a side surface of the housing 220 aligned with an antenna radiator, radiation efficiency of the antenna may be decreased due to interference by the finger contacting the housing 220. When wearable devices are used in a state worn on a body, since a situation in which the wearable device 101 is rotated may frequently occur, communication performance of the wearable device 101 according to an embodiment may be better than communication performance of the wearable device according to the comparative example.

As illustrated in FIGS. 6A, 6B, and 6C, the wearable device 101 using at least a portion of the substrate 210 as an antenna radiator may have substantially the same communication performance as or better communication performance than the wearable device according to a comparative example. The wearable device 101 according to an embodiment may secure an internal space of the housing 220 and may have improved communication performance.

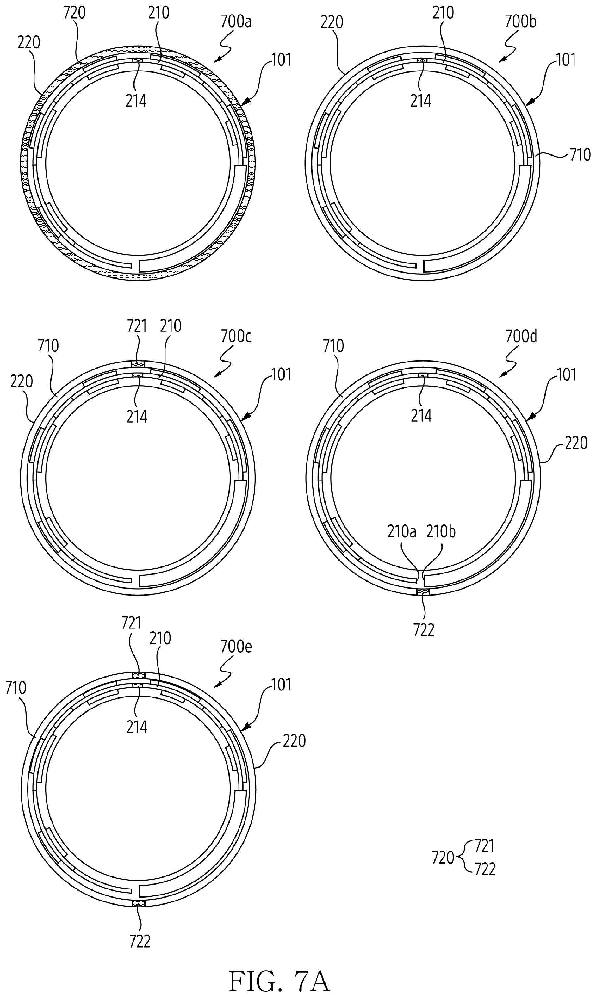

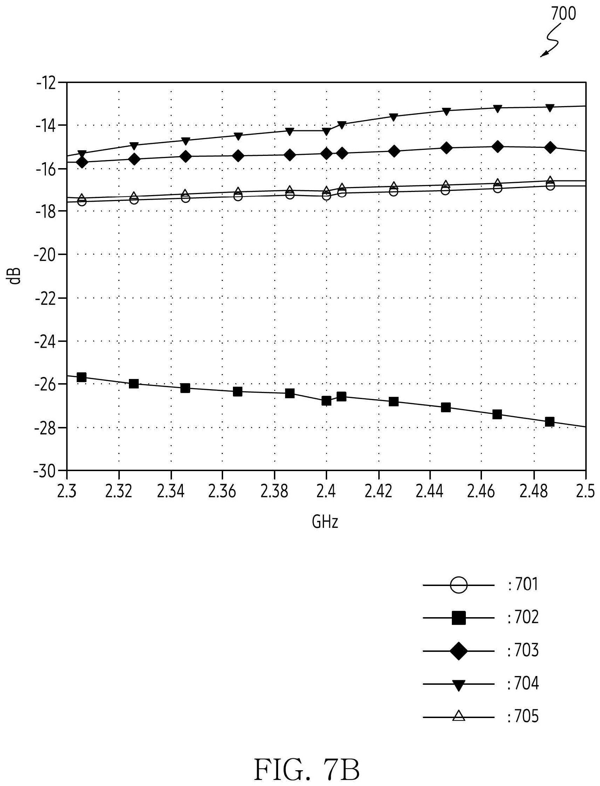

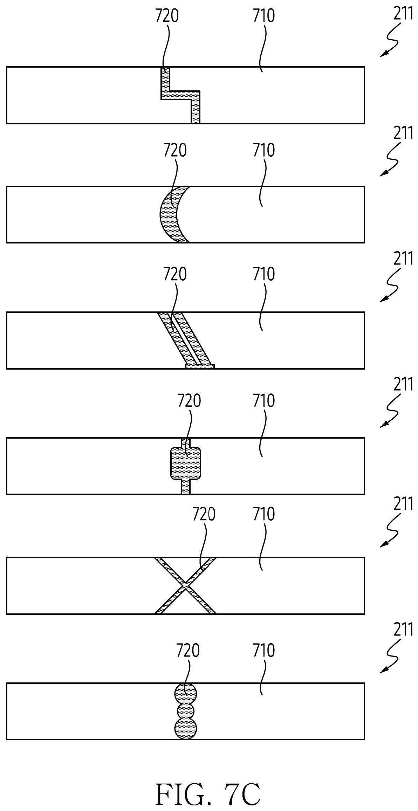

FIG. 7A illustrates structures of a housing of a wearable device according to an embodiment. FIG. 7B is a graph illustrating radiation efficiency of an antenna according to the structures of the housing illustrated in FIG. 7A. FIG. 7C illustrates exemplary non-conductive parts.

For example, the housing 220 may be formed of a non-conductive material and/or a conductive material. For example, in a case that the housing 220 is formed of a non-conductive material, the housing 220 may include plastic, ceramic, synthetic fiber, and/or rubber, but is not limited thereto. For example, in a case that the housing 220 is formed of a conductive material, the housing 220 may include metal such as gold, silver, and platinum and/or silicon, but is not limited thereto.

Referring to FIG. 7A, the housing 220 may selectively include a segment structure. The segment structure may be referred to as a structure in which a partial area of the housing 220 is formed of a material distinguishable from a remaining area of the housing 220 and thus has a physical property and/or a chemical property distinguishable from the remaining area. For example, the housing 220 may include a conductive part 710 including a conductive material and/or a non-conductive part 720 including a non-conductive material.

700a of FIG. 7A illustrates the wearable device 101 having the housing 220 including only a non-conductive material. For example, the housing 220 may include only the non-conductive part 720. For example, in a case that the housing 220 is formed only of a non-conductive material, an electromagnetic wave radiated from at least a portion of the substrate 210 inside the housing 220 may easily pass through the housing 220 and be radiated. For example, the housing 220 may not include a segment structure.

700b of FIG. 7A illustrates the wearable device 101 having the housing 220 including only a conductive material. For example, the housing 220 may include only the conductive part 710. For example, in a case that the housing 220 is formed only of a conductive material, an electromagnetic wave radiated from at least a portion of the substrate 210 inside the housing 220 may be shielded by the conductive material included in the housing 220, and thus may be difficult to be radiated. For example, the housing 220 may not include a segment structure.

700c, 700d, and 700e of FIG. 7A illustrate the wearable device 101 having the housing 220 including a conductive material and a non-conductive material. For example, the housing 220 may include the conductive part 710 and the non-conductive part 720. 700c of FIG. 7A illustrates the wearable device 101 including a first non-conductive part 721 formed in a first area of the housing 220 at least partially aligned with a feeding point (e.g., the feeding point 214 of FIG. 3A). 700d of FIG. 7A illustrates the wearable device 101 including a second non-conductive part 722 located in a second area of the housing 220 at least partially aligned with an end (e.g., an end 210a and/or another end 210b) of the substrate 210. 700e of FIG. 7A illustrates the wearable device 101 including both the first non-conductive part 721 formed in the first area and the second non-conductive part 722 formed in the second area.

Referring to a graph 700 of FIG. 7B, radiation efficiency of an antenna may vary based on a material and a structure of a housing (e.g., the housing 220 of FIG. 7A). An x-axis of the graph 700 is a frequency (unit: giga hertz (GHz)), and a y-axis of the graph 700 is radiation efficiency (unit: decibel (dB)).

A first graph 701 of FIG. 7B illustrates radiation efficiency of an antenna in a wearable device (e.g., the wearable device 101 of FIG. 7A) (e.g., 700a of FIG. 7A) having the housing 220 including only a non-conductive part (e.g., the non-conductive part 720 of FIG. 7A). A second graph 702 of FIG. 7B illustrates radiation efficiency of an antenna in a wearable device 101 (e.g., 700b of FIG. 7A) having the housing 220 including only a conductive part (e.g., the conductive part 710 of FIG. 7A). A third graph 703 of FIG. 7B illustrates radiation efficiency of an antenna in a wearable device 101 (e.g., 700c of FIG. 7A) including the conductive part 710 and a first non-conductive part (e.g., the first non-conductive part 721 of FIG. 7A). A fourth graph 704 of FIG. 7B illustrates radiation efficiency of an antenna in a wearable device 101 (e.g., 700d of FIG. 7A) including the conductive part 710 and a second non-conductive part (e.g., the second non-conductive part 722 of FIG. 7A). A fifth graph 705 of FIG. 7B illustrates radiation efficiency of an antenna in a wearable device 101 (e.g., 700e of FIG. 7A) including the conductive part 710, the first non-conductive part 721, and the second non-conductive part 722.

Referring to FIG. 7B, the second graph 702 may have the lowest radiation efficiency within a frequency range between about 2.3 GHz and about 2.5 GHz. In a case of the housing 220 including only the conductive part 710, since an electromagnetic wave radiated from at least a portion of the substrate 210 inside the housing 220 is shielded by the conductive part 710, it is difficult to be radiated, and thus radiation efficiency of the antenna may be decreased.

The fourth graph 704 may have the highest radiation efficiency within a frequency range between about 2.3 GHz and about 2.5 GHz. For example, when an electrical signal is fed to a feeding point (e.g., the feeding point 214 of FIG. 7A), a radiation current may be formed most strongly at the feeding point 214, and an electromagnetic field may be formed most strongly at an end (e.g., an end 210a and/or another end 210b of FIG. 7A) of the substrate 210 farthest from the feeding point 214. Since an electromagnetic wave may be emitted to an outside of the housing 220 through the second non-conductive part 722 aligned with an end of the substrate 210 at which an electromagnetic field is formed most strongly, it may have the highest radiation efficiency.

The first graph 701 and the fifth graph 705 may have substantially the same radiation efficiency within a frequency range between about 2.3 GHz and about 2.5 GHz. The third graph 703 may have radiation efficiency lower than that of the fourth graph 704 and higher than that of the first graph and the fifth graph, within a frequency range between about 2.3 GHz and about 2.5 GHz. Except for the second graph 702 indicating the lowest radiation efficiency, the first graph 701, the third graph 703, the fourth graph 704, and the fifth graph 705 may indicate radiation efficiency sufficient for communication with an external electronic device (e.g., the external electronic device 300 of FIG. 2A). The wearable device 101 according to an embodiment may have remaining structures (e.g., 700a, 700c, 700d, and 700e of FIG. 7A) except for a housing 220 including only the conductive part 710 (e.g., 700b of FIG. 7A).

Referring to FIG. 7C, a shape of the non-conductive part 720 may vary. For example, the non-conductive part 720 may be formed in the first housing part 221 exposed to an outside. For example, a shape of the non-conductive part 720 may be implemented as various examples illustrated in FIG. 7C, but is not limited thereto. For example, since the conductive part 710 and the non-conductive part 720 may be visible from an outside, the conductive part 710 and the non-conductive part 720 may also be used as design elements. For example, by forming a shape of the non-conductive part 720 to have personality, an external design by the conductive part 710 and the non-conductive part 720 visible from an outside may be formed.

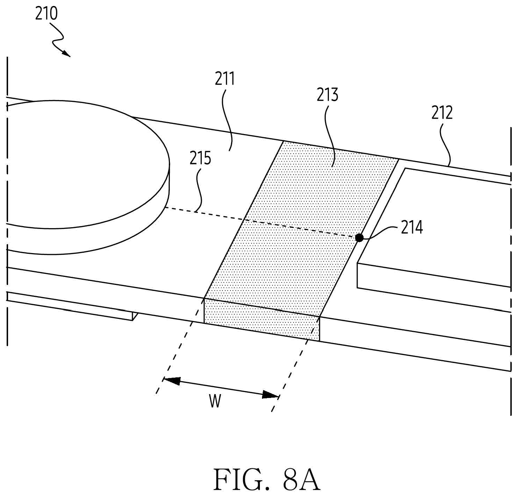

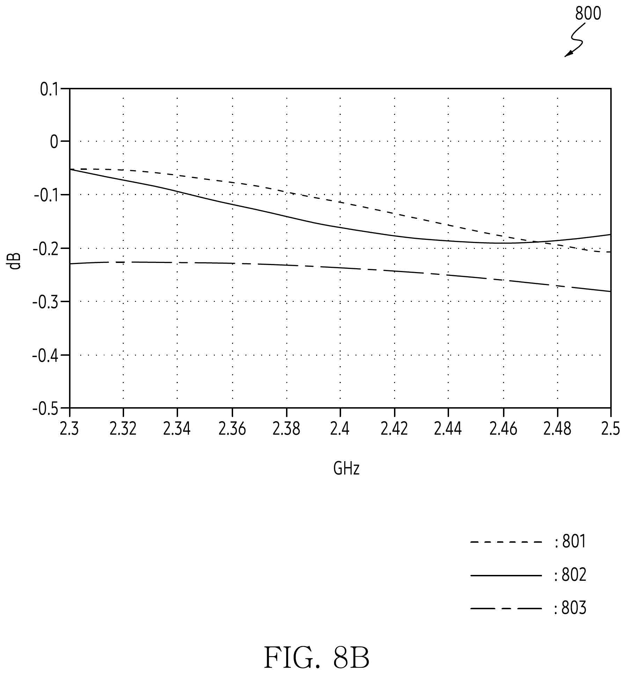

FIG. 8A illustrates a part of a substrate according to an embodiment. FIG. 8B is a graph illustrating radiation efficiency of an antenna according to a width of a fill cut area.

Referring to FIG. 8A, a fill cut area 213 may be located between a first part 211 and a second part 212. For example, by the fill cut area 213, the first part 211 may be spaced apart from the second part 212. For example, a gap between the first part 211 and the second part 212 may be determined by a width of the fill cut area 213. For example, an electrical signal provided from wireless communication circuitry (e.g., the wireless communication circuitry 192 of FIG. 2C) disposed on the first part 211 may be transmitted to a feeding point 214 located in the second part 212 through a feeding path 215 located in the fill cut area 213.

For example, at least a portion of a substrate 210 may operate as a dipole antenna by the first part 211, the second part 212, and the fill cut area 213. When at least a portion of the substrate 210 operates as a dipole antenna, a width W of the fill cut area 213 may not be limited to a designated size.

Referring to a graph 800 of FIG. 8B, even when a width (e.g., the width W of FIG. 8A) of a fill cut area (e.g., the fill cut area 213 of FIG. 8A) is changed, at least a portion of a substrate (e.g., the substrate 210 of FIG. 8A) may have radiation efficiency sufficient to operate as a dipole antenna. An x-axis of the graph 800 is a frequency (unit: giga hertz (GHz)), and a y-axis of the graph 800 is radiation efficiency (unit: decibel (dB)).

A first graph 801 of FIG. 8B illustrates radiation efficiency of a dipole antenna having substantially the same size as the substrate 210. A second graph 802 of FIG. 8B illustrates radiation efficiency of an antenna including at least a portion of the substrate 210 in a case that the width W of the fill cut area 213 is about 0.2 mm. A third graph 803 of FIG. 8B illustrates radiation efficiency of an antenna including at least a portion of the substrate 210 in a case that the width W of the fill cut area 213 is about 2 mm.

When comparing the first graph 801, the second graph 802, and the third graph 803, the first graph 801, the second graph 802, and the third graph 803 may indicate similar radiation efficiency within a frequency range between about 2.3 GHz and about 2.5 GHz. For example, with respect to a frequency of about 2.4 GHz, the first graph 801 may indicate higher radiation efficiency than the second graph 802 and the third graph 803, but a difference in radiation efficiency may be small. For example, a difference in radiation efficiency between the first graph 801 and the second graph 802 may be about 0.5 dB, and a difference in radiation efficiency between the first graph 801 and the third graph 803 may be about 1 dB. Since the difference is small, even when the width W of the fill cut area 213 is formed between about 0.2 mm and about 2 mm, at least a portion of the substrate 210 may operate as a dipole antenna. A numerical range regarding the width W of the fill cut area 213 described above is merely exemplary for explaining that performance of an antenna including at least a portion of the substrate 210 may be substantially maintained even when the width W of the fill cut area 213 is changed, and it is not limited thereto.

A wearable device 101 is provided. The wearable device 101 may include wireless communication circuitry 192 and a substrate 210. The substrate 210 may include a first part 211 on which the wireless communication circuitry 192 is disposed, a second part 212 including a feeding point 214 electrically connected to the wireless communication circuitry 192, and a fill cut area 213 disposed between the first part 211 and the second part 212. The wireless communication circuitry 192 may be configured to communicate with an external electronic device 300 using at least a portion of the substrate 210, by feeding the feeding point 214 through the fill cut area 213. According to the present disclosure, the wearable device 101 may use at least a portion of the substrate 210 as an antenna radiator. For example, the substrate 210 may include the first part 211 and the second part 212 separated by the fill cut area 213. For example, the substrate 210 may operate as a dipole antenna operating based on a potential difference between the first part 211 and the second part 212. Since the wearable device 101 according to an embodiment uses at least a portion of the substrate 210 as an antenna radiator, a separate arrangement space for the antenna radiator is not required, so a structure of the wearable device 101 may be simplified, and a space for at least one electronic component 230 may be secured in an internal space of the housing 220.

For example, the wearable device 101 may further include a housing 220 surrounding the substrate 210. A shape of the housing 220 may be a ring-shaped.

For example, the substrate 210 may be deformable into a shape corresponding to the shape of the housing 220. The substrate 210 may be bent inside the housing 220 to correspond to the shape of the housing 220. According to the present disclosure, since the substrate 210 has flexibility, the substrate 210 may be stably disposed in the housing 220.

For example, an end 210a of the substrate 210 may be spaced apart from another end 210b of the substrate 210 opposite to the end 210a, inside the housing 220. According to the present disclosure, in a case that the substrate 210 is bent to correspond to a ring shape, both ends of the substrate 210 may be spaced apart from each other so that at least a portion of the substrate 210 operates as a dipole antenna. For example, in a case that the substrate 210 is bent to have a ring shape inside the housing 220, an end 210a of the substrate 210 may be spaced apart from another end 210b of the substrate 210 opposite to the end 210a. As the end 210a is spaced apart from the another end 210b, the first part 211 and the second part 212 may be separated from each other and form a dipole antenna.

For example, the wearable device 101 may further include at least one electronic component 230 disposed on the substrate 210. The wireless communication circuitry 192 may be configured to communicate with the external electronic device 300 by at least partially using the substrate 210 and the at least one electronic component 230 disposed on the substrate 210, by feeding the feeding point 214. According to the present disclosure, since the wearable device 101 may use the substrate 210 and/or the at least one electronic component 230 as an antenna radiator, a separate antenna radiator (e.g., a conductive pattern) may be omitted within the housing 220.

For example, an electrical length L1 of the first part 211 may correspond to an electrical length L2 of the second part 212. According to the present disclosure, two conductive poles of a dipole antenna may be implemented by the first part 211 and the second part 212.

For example, at least a portion of the substrate 210 may be configured to transmit or receive a signal on a resonant frequency based on an electrical length L of the substrate 210.

For example, the substrate 210 may include at least one wire 250 extending from the first part 211 across the fill cut area 213 to the second part 212, and a connecting member 270 located in the fill cut area 213 and electrically connected to the at least one wire 250. According to the present disclosure, by the at least one wire 250, an electrical connection between an electronic component disposed on the first part 211 and an electronic component disposed on the second part 212 may be provided. The connecting member 270 may be a passive element (e.g., inductor and/or capacitor) having a designated parameter value (e.g., inductance and/or capacitance). For example, the connecting member 270 may be an inductor having a designated inductance value so that the at least one wire 250 has a reference impedance.

For example, the wearable device 101 may further include a processor 120 disposed on the substrate 210 and at least one electronic component 230 disposed on the substrate 210. The at least one wire 250 may include a first wire 251 electrically connecting the processor 120 and the at least one electronic component 230, and a second wire 252 electrically connecting a ground layer in the first part 211 and a ground layer in the second part 212 and surrounding the first wire 251. According to the present disclosure, the second wire 252 may be configured to shield crosstalk causing noise between signal lines in the fill cut area 213.

For example, the wearable device 101 may further include a battery 189 connected to the substrate 210. The wireless communication circuitry 192 may be configured to communicate with the external electronic device 300 by at least partially using the substrate 210 and the battery 189, by feeding the feeding point 214. According to the present disclosure, the battery 189 may operate as a part of an antenna radiator.

For example, at least a portion of the substrate 210 may be configured to operate as a dipole antenna based on a potential difference between the first part 211 and the second part 212.

For example, the wearable device 101 may further include a housing 220 surrounding the substrate 210. The housing 220 may include a non-conductive material. According to the present disclosure, in a case that the housing 220 includes a non-conductive material, an electromagnetic wave radiated from an inside of the housing 220 may easily pass through the housing 220.

For example, the wearable device 101 may further include a housing 220 surrounding the substrate 210. The housing 220 may include a conductive part 710 and a non-conductive part 720. According to the present disclosure, in a case that the housing 220 includes a conductive material, the non-conductive part 720 may be provided for an electromagnetic wave radiated from an inside of the housing 220.

For example, the non-conductive part 720 may include at least one of a first non-conductive part 721 formed in a first area of the housing 220 at least partially aligned with the fill cut area 213 or a second non-conductive part 722 formed in a second area of the housing 220 at least partially aligned with an end of the substrate 210.

For example, the housing 220 may include a first housing part 221 exposed to an outside when the wearable device 101 is worn on a body of the user, and a second housing part 222 at least partially contacting a body of the user when the wearable device 101 is worn on the body of the user. The non-conductive part 720 may be formed on the first housing part 221.

A wearable device 101 is provided. The wearable device 101 may include a housing 220, a substrate 210, and wireless communication circuitry 192. The housing 220 may have a ring shape. The substrate 210 may include a first part 211, a second part 212 spaced apart from the first part 211, and a fill cut area 213 disposed between the first part 211 and the second part 212. The substrate 210 may be disposed within the housing 220. The wireless communication circuitry 192 may be configured to transmit a signal on a designated frequency to an external electronic device 300 or receive the signal from the external electronic device 300, by using at least a portion of the substrate 210. The wireless communication circuitry 192 may be disposed on the first part 211. The second part 212 may be located at an end of the second part 212 facing the first part 211. The second part 212 may include a feeding point 214 electrically connected to the wireless communication circuitry 192.

For example, the substrate 210 may be deformable into a shape corresponding to the shape of the housing 220. The substrate 210 may be bent inside the housing 220 to correspond to the shape of the housing 220.

For example, the wearable device 101 may further include at least one electronic component 230 disposed on the substrate 210. The wireless communication circuitry 192 may be configured to communicate with the external electronic device 300 by at least partially using the substrate 210 and the at least one electronic component 230 disposed on the substrate 210, by feeding the feeding point 214.

For example, an electrical length L1 of the first part 211 may correspond to an electrical length L2 of the second part 212.

For example, the substrate 210 may include at least one wire 250 extending from the first part 211 across the fill cut area 213 to the second part 212, and a connecting member 270 located in the fill cut area 213 and electrically connected to the at least one wire 250.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A wearable device comprising:
wireless communication circuitry; and
a substrate including a first part in which the wireless communication circuitry is disposed, a second part including a feeding point electrically connected to the wireless communication circuitry, and a fill cut area disposed between the first part and the second part,
wherein the wireless communication circuitry is configured to communicate with an external electronic device using at least a portion of the substrate by feeding the feeding point through the fill cut area.

2. The wearable device of claim 1, further comprising a housing surrounding the substrate,
wherein a shape of the housing is ring-shaped.

3. The wearable device of claim 2,
wherein the substrate is deformable into a shape corresponding to the shape of the housing and is at least partially bent to correspond to the shape of the housing.

4. The wearable device of any one of claims 2 or 3,
wherein an end of the substrate is spaced apart from another end of the substrate opposite to the end, inside the housing.

5. The wearable device of any one of claims 1 to 4, further comprising at least one electronic component disposed on the substrate,
wherein the wireless communication circuitry is configured to communicate with the external electronic device by at least partially using the substrate and the at least one electronic component disposed on the substrate by feeding the feeding point.

6. The wearable device of any one of claims 1 to 5,
wherein an electrical length of the first part corresponds to an electrical length of the second part.

7. The wearable device of any one of claims 1 to 6,
wherein the at least a portion of the substrate is configured to transmit or receive a signal on a resonant frequency based on an electrical length of the substrate.

8. The wearable device of any one of claims 1 to 7,
wherein the substrate includes at least one wire extending from the first part, across the fill cut area, to the second part, and a connecting member located within the fill cut area and electrically connected to the at least one wire.

9. The wearable device of claim 8, further comprising:
a processor disposed on the substrate; and
at least one electronic component disposed on the substrate,
wherein the at least one wire includes a first wire electrically connecting the processor and the at least one electronic component, and a second wiring electrically connecting a ground layer in the first part and a ground layer in the second part and surrounding the first wiring.

10. The wearable device of any one of claims 1 to 9, further comprising a battery connected to the substrate,
wherein the wireless communication circuitry is configured to communicate with the external electronic device by at least partially using the substrate and the battery by feeding the feeding point.

11. The wearable device of any one of claims 1 to 10,
wherein the at least a portion of the substrate is configured to operate as a dipole antenna based on a potential difference between the first part and the second part.

12. The wearable device of any one of claims 1 to 11, further comprising a housing surrounding the substrate,
wherein the housing comprises a non-conductive material.

13. The wearable device of any one of claims 1 to 12, further comprising a housing surrounding the substrate,
wherein the housing includes a conductive part and non-conductive part.

14. The wearable device of claim 13,
wherein the non-conductive part includes at least one of a first non-conductive part or a second non-conductive part,
wherein the first non-conductive part is formed in a first area of the housing at least partially aligned with the fill cut area, and
wherein the second non-conductive part is formed in a second area of the housing at least partially aligned with an end of the substrate.

15. The wearable device of any one of claims 13 or 14,
wherein the housing includes a first housing part exposed to the outside when the wearable device is worn on a user's body, and a second housing part at least partially in contact with the user's body when the wearable device is worn on the user's body,
wherein the non-conductive part is formed on the first housing part.
